# EUROPEAN PATENT APPLICATION

(11) **EP 4 371 649 A1**
(43) Date of publication of application: **22.05.2024**
(21) Application number: 22383113.2
(22) Date of filing: 18.11.2022
(51) Int. Cl.: B01D 53/34, B01D 53/62, B01D 53/96, C04B 7/36

(54) **STEAM PARTIAL PRESSURE SWING CALCINATION PROCESS TO PRODUCE HIGH PURITY CO2 FROM CACO3**

(71) Applicant: Consejo Superior De Investigaciones Científicas (CSIC), 28006 Madrid (ES)
(72) Inventor: ABANADES GARCIA, Juan Carlos, 33011 OVIEDO (ES); ARIAS ROZADA, Borja, 33011 Oviedo (ES); FERNANDEZ GARCIA, José Ramón, 33011 Oviedo (ES)
(74) Representative: Pons

(57) **Abstract**

This invention discloses a calcination process to produce high purity CO₂ from solids containing CaCO₃ which operates cyclically and continuously on the solids, arranged in a packed or a moving bed, wherein each cycle comprises a first step where the combustion of a fuel in the bed of solids containing CaCO₃ heats them up to an average temperature of between 800-950ºC and a second step wherein a CO₂ partial pressure swing is applied to extract pure CO₂ from the solids containing CaCO₃ by feeding steam to the bed. Said combustion can be carried out directly with air, oxygen enriched air or O₂/CO₂ mixtures when the process is applied to the calcination of a continuous flow of limestone in a moving bed shaft kiln. The process is also applied to calcine CaCO₃ formed in reversible calcium looping processes comprising a carbonation reaction step to form CaCO₃ from CaO.

## Description

### OBJECT OF THE INVENTION

This invention discloses a calcination process to produce high purity CO₂ from solids containing CaCO₃. The process operates cyclically and continuously on the solids, arranged in a packed or a moving bed. The process is characterized by each cycle comprising a first step of combustion of a fuel in the bed of solids containing CaCO₃, heating them up to an average temperature of between 800-950ºC, and a second step of application of a swing in partial pressure of CO₂ by feeding steam to the bed of solids containing CaCO₃ to calcine them, preferably causing their adiabatic cooling by 30-200ºC. Said combustion can be carried out directly with air, oxygen enriched air or O₂/CO₂ mixtures when the process is applied to the calcination of a continuous flow of limestone in a moving bed shaft kiln. The process is also applied to calcine CaCO₃ formed in reversible calcium looping processes comprising a carbonation reaction step to form CaCO₃ from CaO. In these cases, the preferred method of combustion of the fuel used to heating up the bed of solids containing CaCO₃ is a chemical looping process, that uses as oxygen carrier a second solid containing a metal oxide (preferably NiO or CuO) mixed in the bed of solids containing CaCO₃.

### FIELD OF THE INVENTION

This is a process to capture CO₂ in pure form during the calcination of CaCO₃. When the source of CaCO₃ is a natural limestone and the product is CaO, the process is applicable to shaft kilns. When the source of CaCO₃ is a process involving a step of carbonation of CaO, the process is applicable to calcium looping processes to capture CO₂ from flue gases, or to sorption enhanced reforming or sorption enhanced water gas shift processes where carbonaceous fuels are converted into hydrogen, while CaCO₃ is formed from CaO carbonation.

### BACKGROUND OF THE INVENTION

The capture of CO₂ in high purity form (for example with a concentration higher than 99%v in CO₂) from fuel and flue gases in industrial processes, is of interest in the context of climate change mitigation efforts. The original source of carbon in the gases may be from the carbonaceous fuel used to provide energy to the process or from the decomposition of natural sources of CaCO₃ (i.e., when producing lime and cement).

On the other hand, there are high temperature calcium looping CO₂ capture systems, using CaO as sorbent of CO₂ (usually at temperatures between 600-700ºC) to form CaCO₃. The CO₂ can be captured from combustion flue gases or during sorption enhance reforming processes or calcium-enhanced water gas shift processes, to produce hydrogen from a fuel gas while capturing CO₂ at high temperature with CaO. The operation at these high temperatures facilitates the recovery, during the exothermic carbonation of CaO (-170kJ/molCaO at 650ºC), of the equivalent energy consumed during the calcination of CaCO₃, that takes place at temperatures usually higher than 900ºC (depending on ambient concentration of CO₂).

The calcination of CaCO₃ containing solids making use of vacuum calcination conditions has been described in the state of the art. CaCO₃ containing solids can be a natural mineral like limestone or carbonated solids from calcium looping CO₂ capture processes.

US2017/0096335A1 claims higher energy efficiencies by operating an adiabatic calcium looping packed bed reactor at a sufficient high pressure during the exothermic carbonation step to reach sufficiently high temperatures of the carbonated solids as to initiate a reversible vacuum-driven calcination step after each carbonation step. CaO solids heat up by up to 150° C at the end of the exothermic carbonation period. Such increase in temperature is claimed to be sufficient to sustain a subsequent vacuum calcination step, that causes an equivalent drop in temperature as the CaCO₃ is calcined. Note that no heat is added externally to the packed bed of sorbent, as the system is assumed to be adiabatic. This means that the sorbent heats up during carbonation and cools back to its original temperature during calcination indefinitely during successive carbonation/calcination cycles. Such process will however face practical limitations, that may make it not viable in practice. On one hand, real systems are not fully adiabatic. Heat transfer from the outside, or from gas reactants supplied at higher temperature than the gas products, is needed to fulfil the overall heat balance. However, there are constrains imposed to the temperatures of the gas reactants from the additional heat transfer equipment required and because in some cases, preheating such gas reactants is not viable. For example, in sorption enhanced water gas shift processes using CaO as CO₂ sorbent, the syngas (containing CO) must be fed at temperatures below 500ºC to avoid carbon deposition. Linked to this, metal dusting phenomena in the heat exchangers used as gas preheaters must be prevented by feeding gases at temperatures as low as 300ºC. However, the product gases tend to leave the reactor at higher temperature (i.e., between 650-850 °C depending on the temperature achieved during CaO carbonation).

The problems associated with the need of heat supply to sustain the operation of calcium looping systems are aggravated when using packed beds and when taking into account the typically low carbonation molar conversion of real CaO materials when reacting with CO₂ during many cycles. Despite intense research effort over the last decades, there is no yet a suitable and widely available CaO sorbent (i.e., with proven mechanical stability and reactivity to react fast and reversibly with CO₂ under realistic conditions in the reactors) able to sustain more than 3-10% molar carbonation conversions of CaO to CaCO₃ over hundreds or thousands of cycles, as it is the case for CaO derived from calcination from natural limestone. This means that active CaO in calcium looping processes using currently known CaO materials, will typically be accompanied by a very large portion (95-99%w when including other solids in the system such as catalyst and their supports) of materials that are inert towards carbonation. Therefore, despite the exothermic nature of carbonation of CaO, the temperature increment achievable during carbonation will not reach more than 50-150 °C (depending on carbonation conversion and fraction of inerts), which is unsuitable to connect the operating window for effective CO₂ capture by carbonation (between 600-700ºC) with the operating window for effective calcination of CaCO₃ in pure CO₂ (the decomposition temperature of CaCO₃ at atmospheric pressure in pure CO₂ is about 900ºC). Therefore, additional heat requirements during calcination are known to be needed when operating with known CaO sorbent properties (i.e., a maximum CO₂ carrying capacity of 0.05 and 0.1) and known operating windows for carbonation and calcination. Moreover, US2017/0096335A1 is silent about the need of external heat supply to their calcium looping system.

US9505998B2 discloses a solution to solve the problem of heat supply to a packed bed calciner by arranging a combustion chamber for providing additional thermal power to the calciner through a metallic wall, that separates the region containing the bed of solids with CaCO₃ from the combustion chamber. However, this solution is limited in applicability, because it requires large heat transfer areas of costly alloys to allow the necessary heat transfer between the combustor chamber and the calciner at temperatures exceeding 900ºC, in particular when considering that combustor chamber and calciner may need to operate under substantial differences in pressure.

US8506915B2 discloses another solution to the problem of heat requirements for calcination within a bed of solids containing CaCO₃ by introducing a second solid in the bed that contains Cu/CuO. This is a type of oxygen carrier material that has been developed and tested in the state of the art of chemical looping combustion or indirect combustion applications. In chemical looping combustion processes, a metal (such as Ni, Cu, Fe) is oxidised at a high temperature in an "air reactor", in a process that is highly exothermic. In a subsequent step, the metal oxide or "oxygen carrier" (such as NiO, CuO or Fe₂O₃) is reduced by a fuel gas to produce a N₂-free flue gas and regenerate the metal or "metal fuel". However, the use of metal fuel oxidation reactions with air to supply energy for CaCO₃ calcination has the problem of the unwanted dilution of the CO₂ evolved during calcination with the nitrogen contained in the air. To solve this, the key feature of US8506915B2 is the choice of the Cu/CuO chemical loop, as CuO can undertake an exothermic reduction reaction to Cu using a fuel gas (that burns primarily to CO₂ and H₂O) and supplies the necessary energy to the solids bed to drive the calcination of CaCO₃ during the reduction stage of CuO to Cu. This process has been proposed for Sorption Enhanced Reforming of methane and steam to produce a hydrogen-rich stream and high purity CO₂, using a bed of solids containing a Nickel reforming catalyst as a third additional solid to the CaO sorbent and Cu oxygen carrier ((Fernandez et al. Conceptual design of a hydrogen production process from natural gas with CO2 capture using a Ca-Cu chemical loop, International Journal of Greenhouse Gas Control 2012, | Volume 6 | Page 126-141). Another variant of such process has been recently been proposed to treat steel mill off gases, like blast furnace gas, BFG, in the so called CASOH process, where a bed of solids containing CaO first removes the CO₂ contained in the BFG and promotes the enhanced water gas shift of the CO by capturing the resulting CO₂ as CaCO₃. In a subsequent step, the reduction of CuO with a fuel gas such as CH₄ can regenerate CaO while producing CO₂ and water vapour (Fernandez et al. Advanced Packed-Bed Ca-Cu Looping Process for the CO2 Capture From Steel Mill Off-Gases, Frontiers in Energy Research 2020, July 2020 | Volume 8 | Article 146). The design of these combined calcium looping and chemical looping processes reveals that they can be highly energy efficient if, and only if, an effective heat recovery for power generation is included in the system. This is because these processes require to function with an intermediate additional reaction step involving the oxidation of the Cu with air, before the desired reduction-calcination step. Such oxidation introduces demands for a technically challenging operation at high pressure, needed to minimise the calcination of CaCO₃ during the oxidation of Cu. The need of additional power generation equipment is a weakness in practical applications targeting a maximum production yield of H₂ from sorption enhanced reforming or calcium-enhanced water gas shift processes, where it is technically more attractive to maximise the H₂ yield (because this is the product targeted from such processes) than maximise the thermal energy outputs from the process (even if they are in the form of high temperature gas product streams).

Also related to this invention are patents related to the application of vacuum pressure to a calcination process of limestone, so that the CO₂ evolved from the calcination of CaCO₃ can be obtained separately or even in pure form.

US4748010 reviews in detail prior state of the art on vacuum calcination of batches of limestone to produce lime. It discloses a semi-continuous CaCO₃ calcination process that attempts to exploit the favourable calcination conditions achieved when a vacuum is applied to a preheated stone containing CaO and CaCO₃. In a first step, the limestone is heated and partially calcined by air combustion until 50-85% calcination conversion is achieved (i.e., % of mol of CaCO₃ converted to CaO) obtaining a hot mass with sufficient accumulated heat to complete the calcination of the remaining unconverted limestone therein in one final cycle. To do this, the hot mass of solids is moved to a vacuum chamber zone, where the complete conversion of the limestone is achieved using the retained heat in the solids, while subjecting the partially calcined hot mass to a sufficiently strong vacuum during the time needed to achieve total conversion of the limestone. It must be noted that US4748010 is not intended to be a CO₂ capture process, because most of the CO₂ evolved during calcination is emitted in diluted form in flue gases emitted during the first heating up step and partial calcination of the limestone, under standard combustion conditions in the kiln. Furthermore, it is important to note that the fraction of pure CO₂ attainable by the method disclosed in US4748010 will not exceed in reality more than 10% molar conversion of the initial mass of limestone, due to known thermodynamic and kinetic constrains, that are briefly explained below.

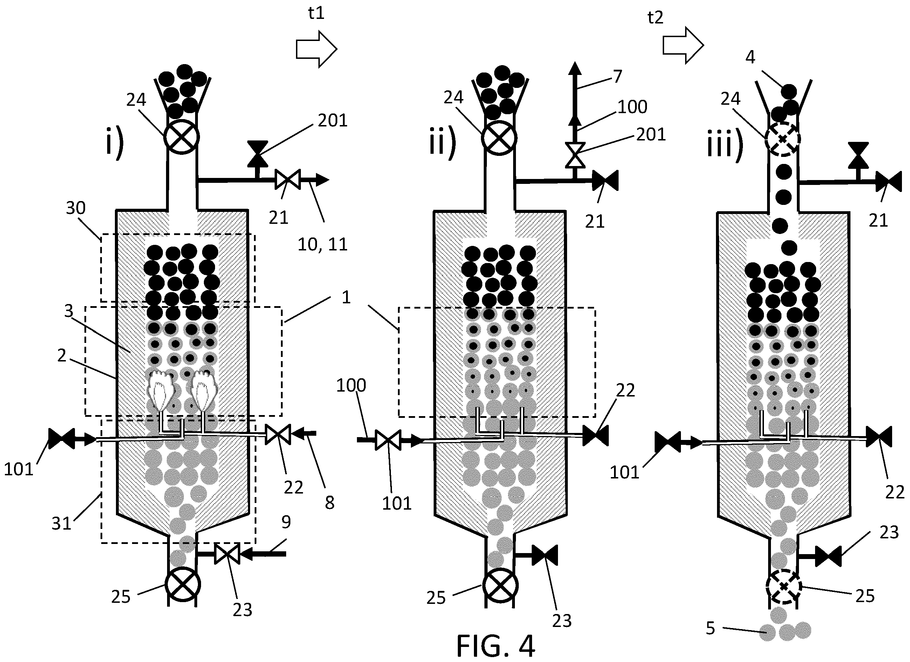

The state of the art of calcination of CaCO₃ provides further experimental support for the phenomena of adiabatic cooling of CaCO₃ containing solids, preheated to their calcination temperature, when submitted to a fast change, or pressure swing, in partial pressure of CO₂ in their gas environment. Hills, AWD; "The mechanism of the thermal decomposition of calcium carbonate" Chemical Engineering Science, 1968, Vol. 23, pp. 297-320, investigated how the decrease in the partial pressure of CO₂ around a calcining stone (or a stone containing a core of CaCO₃) results in an initially fast calcination rate and a decrease in the temperature of the carbonated core. For example, Figure 4 of Hills shows a decrease in temperature in the interior of a calcining particle of 1 cm diameter once it is subjected to a step change in the partial pressure of CO₂ in the surroundings of the particle held at atmospheric pressure. The decrease in temperature recorded in the interior is a sign of a fast heat transfer from the interior towards the external CaCO₃ stone surface, partially driving the calcination. After such initial drop in temperature (about 50ºC in less than 5 minutes) the internal parts of the stone must reach a temperature of the exterior and slow heat transfer from the external CaO part of the partially calcined stones towards the shrinking carbonated core becomes the governing process in the overall calcination rate of the stone. Note that the complete calcination is achieved after 70 minutes in the example of such Figure 4 for a 1 cm diameter particle in an oven environment at 867ºC.

In summary, there is still a need to develop efficient methods for CaCO₃ calcination to produce CaO and a pure stream of CO₂ in a wide range of applications such as lime kilns or calcium looping systems for CO₂ capture from gases, involving a cyclic repetition of a calcination step of CaCO₃ and a carbonation step of CaO.

### DESCRIPTION OF THE INVENTION

The main object of the present invention is to provide a process to recover in high purity form part of the CO₂ released from the calcination of solids containing CaCO₃. The process is applicable to processes for calcination of limestone in shaft kilns, which are thermally insulated vessels that have moving bed of solids containing CaCO₃ in the calcination region of the shaft kiln. The method is also applicable to calcium looping processes using thermally insulated vessels containing packed beds of solids containing CaCO₃, in this case formed during the capture of CO₂ by CaO in contact with a combustion flue gas or any other gas containing CO₂, or during the sorption enhanced reforming or sorption enhanced water gas shift process steps, that convert fuel gases to hydrogen when in the presence CaO and other gases, forming CaCO₃.

This invention provides a calcination process to recover in high purity form CO₂ after separating it from steam, the CO₂ being released from the calcination of solids containing CaCO₃, with said solids being preheated to a temperature between 650-800ºC and arranged in a thermally insulated vessel (1), wherein the process is characterized by the continuous repetition, at least twice, of a sequence of at least the following consecutive steps:
i) a heating up step combusting a fuel within the bed of solids to heat up the bed of solids containing CaCO₃ to an average temperature of between 800-950ºC; and
ii) a CO₂ partial pressure swing step by feeding steam to the bed of solids.

Preferably, the step of heating up lasts between 5 and 20 min and/or the step of CO₂ partial pressure swing lasts between 5 and 20 min.

In this way, the process gives as separated reaction products, after steam condensation, CO₂ and CaO. The calcination under the reduced partial pressure of CO₂ around the solids imposed by the injection of steam heated at temperatures over 550ºC (to avoid risk of hydration of CaO) causes a temperature drop in the bed of solids of between 30-200ºC. Said temperature drop is the result of an increase in molar conversion of CaCO₃ to CaO of 0.01 to 0.07 under the close-to-adiabatic conditions that occur in the thermally insulated vessels where calcination is taking place.

Preferably, the combustion of the fuel is carried out with air, oxygen-enriched air or O₂-CO₂ comburent mixtures.

Even more preferably, the fuel is a hydrocarbon gas or hydrogen.

The intention with the previous sequence of steps is to exploit the large difference between heating times and calcination times of the typically large particle sizes (10-150 mm) of limestones processed in shaft kiln calciners or in the particles or pellets (2-10 mm) used in calcium looping processes in packed beds. As quantified below in several examples and experiments, and as known in the state of the art of shaft kiln operations and calcium looping, the higher heating rate of the particles in step i) respect to their calcination rate in the same step i), allows for the introduction to the bed of particles of a certain amount of thermal energy to heat them up, while limiting the progress of the calcination of CaCO₃. It is however unavoidable at this step to initiate a certain calcination of the CaCO₃, and loose some of the CO₂ evolved in such calcination as diluted gas in the flue gases generated by the combustion of a fuel in the bed. At the end of step i) the solids have heated up to an average temperature of 800-950ºC from a lower initial temperature (30-200ºC lower) that resulted from the injection of steam in the previous step ii). Higher average temperatures after the heating step i) would translate into higher losses of CO₂ during the heating step i), by the increased calcination of CaCO₃. To minimise such losses the heating step i) would have to be carried out at high pressure, increasing energy consumption and cost. On the other hand, average temperatures <800ºC at the end of the heating step i) would demand for longer time periods of step ii), as the kinetics of calcination will become slower during the adiabatic cooling imposed in step ii). The use as comburent of oxygen enriched air, or mixtures of O₂ and CO₂, instead of air during the combustion of the fuel in the step i), will have a beneficial effect in minimising the decomposition of CaCO₃ during the combustion step i). This is because combustion with higher O₂ content allows higher concentrations of CO₂ in the flue gas, known to reduce the rate of calcination. For example, when the CO₂ content of a flue gas enriched in CO₂ is 50%v at atmospheric pressure the calcination rate of CaCO₃ is extremely slow compared to the heating rate of the stone until the stone reaches a close value to 850ºC (see other examples below). This is because the equilibrium partial pressure of CO₂ on CaO at 850ºC is close to 0.5 atm. The use of said comburents with high O₂ content during step i) also facilitates the introduction of the necessary energy for calcination in a shorter times of the step i). This is beneficial because it allows the introducion of the step ii) in the process without altering the overall/average thermal power input to the kiln over long periods of time. In other words, introducing step ii) without increasing the power input during the step i) would necessarily translate into a reduction of the average production rate of CaO. This will impact directly the production rate of lime in a shaft kiln or the rate or capacity of the Calcium Looping capture system using such CaO to capture CO₂.

Therefore a preferred embodiment of this invention further comprises the combustion of the fuel carried out with oxygen-enriched air or O₂-CO₂ comburent mixtures. As will be ilustrated in one example below for a lime kiln, adopting a time for step i) identical that for step ii) requires the power input during step i) to double respect to the state of the art process without capture, in order to maintain the same overall lime production capacity. Therefore, the use of a comburent mixture of about 40%vol in O₂, which is part of the state of the art of oxy-combustion systems, will facilitate this doubling of power input while keeping similar flowrates of gases in the kiln, that is important to be able to maintain heat transfer characteristics, pressure drop in the bed, energy efficiencies, etc... respect to the those in modern kilns with no CO₂ capture.

When the stone or carbonated sorbent has been heated to a temperature between 800-950ºC at the end of step i), the onset of the step ii) promotes a fast partial calcination of the CaCO₃ containing solids, that is associated with an equally fast drop in temperature in said solids. In an industrial scale packed bed, with many stones or carbonated sorbent calcining under a low partial pressure of CO₂ at the same time, the release of CO₂ will be controlled at this point by the maximum capacity of downstream equipment to handle the flow of CO₂ and steam coming out from the bed. However, the rate of calcination will eventually decrease with time, as calcination progresses, the availability of heat in the interior of the stone diminishes, and temperature profiles develop in the stone or sorbent. The temperature in the interior of the stone would decreases to values where the intrinsic calcination rate is too slow at the conditions of temperature and partial pressure of CO₂ in the calcination reaction front (which can be assumed to be at equilibrium conditions for temperatures over 700ºC). In view of experimental and modelling results in the state of the art and discussed below, after 5-20 minutes of calcination under reduced partial pressures of CO₂ in step ii) a drop in average temperature in the bed of solids (between 30-200ºC) is caused. This is associated under adiabatic conditions to an increase in molar conversion of CaCO₃ to CaO, or a decrease in CaCO₃ molar fraction, of 0.01 to 0.07. At this point, a return path must be initiated to re-heat the bed of solids. This is the purpose of step i), which involves a combustion step taking place within the bed of solids, to facilitate a fast heat transfer of the combustion energy to the solids, that have just been cooled during the step ii).

When the thermally insulated vessel is a lime shaft kiln, the cyclic sequence noted above is repeated until each stone of limestone initially fed to the kiln is fully calcined in the shaft kiln. Such kiln can be operated in continuous mode in a moving bed configuration, comprising a step of introducing, preferably to the top of the kiln, a batch of particles of solids containing CaCO₃ in the thermally insulated vessel so that the solids are displaced, preferably downwards, in each combustion step while extracting a batch of particles containing CaO, preferably from the bottom of the kiln. In such shaft kilns, the steam will be added to the bottom of the calcination zone, to avoid the contact of CaO product with the steam at temperatures lower than 550ºC in the cooling section of the kiln (and therefore avoid the hydration of CaO, that can lead to CaO swelling, fracture of stoners and plugging of the bed).

In a preferred embodiment, the thermally insulated vessel of the process of this invention is the calcination section of a shaft kiln that additionally contains a limestone preheating zone at the top of the kiln and a CaO cooling section that also preheats combustion air (or oxygen enriched air or O₂/CO₂ mixture, if such comburent is preferred to sustain higher thermal power and higher partial pressures of CO₂ during the combustion or heating up in step i).

The invention also refers to a shaft kiln suitable to carry out the calcination process noted above, to calcine CaCO₃ in the form of limestone and produce a mixture of CO₂ and steam and CaO, the shaft kiln comprising:
- a first vertical shaft;
- means to stage the burning of a fuel with preheated air or other comburent mix in its calcination zone,
- an inlet and outlet gas and solid pipes comprising switching valves with one of the inlet pipes having a switching valve to feed steam to the lower part of the calcination zone and having exit pipes having a switching valve to allow extraction of the product gas containing CO₂ and steam; all configured to allow the continuous repetition of a sequence of at least a first operating period and a second operating period:
- means for feeding a batch of limestone through a solid valve and extracting lime with another solid valve during the first operating period lasting between 5-20 min where fuel is burned within the calcination zone in a staged mode, with the air or other comburent mix being preheated by the CaO and the limestone being preheated with the combustion flue gases flowing from the calcination zone, and
- means for sealing the gas entries/outlets and valves for solids during the second operating period lasting between 5-20 minutes except a gas inlet to feed steam to the bottom of the calcination zone and a gas outlet, to extract a product gas containing pure CO₂ and steam.

Optionally, the shaft kiln further comprises a second vertical shaft connected to the first vertical shaft, the second vertical shaft comprising an additional flow of air to enter the second vertical shaft, in order to transport heat from the lime cooling region and the hot flue gases to the limestone preheating region.

Optionally, the shaft kiln comprises a thermally insulated vessel, wherein the thermally insulated vessel is the calcination section of either the first vertical shaft or the second vertical shaft further comprising a limestone preheating zone at the top of the kiln and a CaO cooling section that preheats combustion air or other comburent mix.

The shaft kiln alternatively comprises means to effectively burn a fuel with preheated air, enriched air or O₂/CO₂ in its calcination zone, said kiln comprising walls thermally insulated, characterized by having inlet and outlet gas and solid pipes containing switching valves with at least one of the pipes having a switching valve connected to a supply of steam, to alternate in a cyclic manner between the following operating periods:
i.a first operating period lasting between 5-20 min where fuel is burned in the calcination zone, with the comburent being preheated by the CaO product and the limestone being preheated with the combustion flue gases flowing from the calcination zone. Said first operating period having means for feeding a batch of limestone through a solid valve and extracting lime with another solid valve; and
ii.a second operating period lasting between 5-20 minutes where gas entries/outlets and valves for solids are sealed except a gas inlet feeding steam to the bottom of the calcination zone and a gas outlet allowing the exit of steam and CO₂.

A particular variant when the comburent mixture is O₂/CO₂ involves the staging of separate streams of O₂ (from an air separation unit) and CO₂ (recycled) to prevent carbonation of the CaO exiting the kiln.

If a double shaft kiln is used, this will operate step i) with combustion in just one shaft using part of the air preheated with the bed of limestone preheating region, while arranging an additional flow of air to enter the second shaft, in order to transport heat from the lime cooling region and the hot flue gases to the limestone preheating region and use such heat to preheat part of the air entering the kiln from the top.

Following the teachings of the state of the art of gas burners in kilns, air and fuel distribution in the calcination region of the kiln during step i) can be arranged in many forms to accommodate maximum allowed temperatures in the kiln as required by CaO quality requirements. However, it is important to realise that, since kilns are usually firing a fuel continuously, the introduction of the step ii) in the methods of this invention to operate lime kilns, necessarily represent a drop in lime production capacity proportional to the ratio between the duration of time of step ii) and the total duration of one cycle of steps i) and ii) first time plus second time (t1+t2). Therefore, a preferred embodiment to solve this is to increase the thermal power input during step i) and so that the thermal power of the combustion during step i) is the result of the multiplication of the average power input in the equivalent kiln without CO₂ capture and the ratio between the sum of the duration step i) and step ii) divided by the duration of step i).

Lime kilns can also be operated with solid fuels in step i), by mixing the right proportion of a solid fuel with the limestone feed. In order to minimise emissions of CO₂ and other gas contaminants during the step i) involving combustion of the solid fuel, it is a preferred embodiment to use as solid fuel a metal such as Fe, Ni or Cu, that exothermically oxidizes with air and that is fed contained in a second solid that is mixed with the solids containing CaCO₃. The intense premixing of the solid fuel with the limestone will lead to a more controlled temperature profiles and homogeneous combustion in the calcination zone of the kiln. As will be shown in examples below, it is possible to maximise the heating of particles containing CaCO₃, while minimising the calcination of the CaCO₃ during combustion step using a metal fuel, because the energy for the heating of the solids (by 30-200ºC as mentioned above) is a small fraction of the energy required for their calcination. Therefore the quantity of air needed for metal fuel oxidation is small, and the maximum losses of CO₂ in such small air mass (given by the equilibrium of CO₂ on CaO at the maximum heating temperature) will aso be small.

When the calcination process of this invention is applied to calcium looping processes, the solids containing CaCO₃ come from a previous carbonation reaction step that is characteristic of all calcium looping processes, which involves the carbonation of CaO to CaCO₃. There is no longer need of a continuous feeding from the outside of CaCO₃, because the calcium looping process is reversible: the CaCO₃ formed during carbonation step is mainly the CaCO₃ that will be calcined during the calcination step (note that there may be also small fraction of CaCO₃ coming from purges or initial batches of CaCO₃ or CaO). In these calcium looping systems, due to the limited value of reversible carbonation molar conversions of the known CaO sorbents (0.03 to 0.1), and the dilution of the Ca-containing solids with catalyst and their supports, it is not favourable to arrange a direct combustion of a fuel with air within the bed of solids. This is because local flames and hot spots would damage the integrity and activity of catalyst and/or sorbent. Therefore, it is important in these systems to undertake the heating up step i) by indirect combustion of a fuel, following the teachings of chemical looping combustion processes in packed beds.

Therefore, the preferred embodiments of this invention refer to the application of the calcination method of this invention to a calcium looping processes that use packed beds, where solids containing CaCO₃ are formed from CaO and CO₂ during a carbonation step, in the presence of a second solid containing a metal such as Ni or Cu acting as catalyst and/or oxygen carrier, where the combustion taking place in the heating up step is a chemical looping combustion of the gaseous fuel with a comburent gas by dividing the fuel combustion period of heating-up step i) in two sub-steps:
j) a first sub-step involving the oxidation with a comburent gas of a second solid containing a metal such as Ni or Cu, the second solid being mixed in the bed of CaCO₃ containing solids; and
jj) a second sub-step, involving the reduction of the oxidised form of the metal fuel formed in sub-step j) by feeding a fuel gas to regenerate the metal fuel in the second solid while releasing concentrated CO₂.
The operation of substep j) at high pressures reduces the fraction of CO₂ released in the flue gases and/or allows a heating of the bed of solids to a higher temperature, which is beneficial for the step ii)

Such sub-step jj) is therefore regenerating the metal catalyst, that must be in reduced form to maintain catalytic activity during the sorption enhanced reactions of natural gas and steam or water gas shift taking place at the same time than the step of carbonation of CaO.

In a preferred embodiment the calcination process of this invention is applied to a post-combustion CO₂ capture process by calcium looping characterized by an additional carbonation step iii) of the CaO generated in step ii) by feeding a combustion flue gas or any other gas containing CO₂ to the packed bed of solids, to the packed bed of solids to increase the molar conversion of CaO to CaCO₃ between 0.03 and 0.1 and restore the CaCO₃ that is in the bed of solids at the beginning of step i).

In another preferred embodiment the calcination process of this invention is applied to a sorption enhanced reforming process in packed beds, SER. Such process requires a second solid in the bed that contains Ni, that is known to perform as a metal fuel (in step i)) and as reforming catalyst during SER step. Such SER step includes a carbonation step iii) of the CaO generated in step ii) by feeding a fuel gas and steam to the packed bed of solids containing CaO and Ni to catalyse the steam reforming of the fuel gas to hydrogen while increasing the molar conversion of CaO to CaCO₃ between 0.03 and 0.1 and restore the CaCO₃ that is in the packed bed of solids at the beginning of step i).

In another preferred embodiment, the calcination process of this invention is applied to a sorption enhanced water gas shift process carried out in packed beds, the process being characterized by the metal fuel and water gas shift catalyst being Cu and by an additional carbonation step iii) of the CaO generated in step ii) by feeding a gas containing CO and steam to the packed bed of solids containing CaO and Cu to enhance the water gas shift reaction of the CO contained in the gas to hydrogen and CO₂, with the CO₂ resulting from the water gas shift reacting with CaO and increasing the molar conversion of CaO to CaCO₃ between 0.03 and 0.1 and restoring the CaCO₃ that is in the bed of solids at the beginning of step i). This particular embodiment may be of special use to decarbonise Blast Furnace Gases from steel mills (see Example 2), where CO concentrations higher than 20%vol are not uncommon. Since the water gas shift reaction is exothermic (-41 kJ/mol), there will be additional heating of the packed bed of solids containing CaO and Cu during the carbonation step iii) and a certain cooling or heat removal step will be needed to extract the energy released in such reaction. In order to further enhance the thermal efficiency of the method, it is a preferred embodiment to carry out such cooling with a variant of the method further comprising and additional step of cooling of the packed bed of solids containing CaO and Cu, designed just to remove the heat released to the solids by the water gas shift reaction of the CO contained in the gas fed in step iii). Since such additional cooling will typically be an order of magnitude smaller than the cooling of the solids during step ii), such additional cooling could be arranged by heat transfer from the bed of solids towards heat exchangers embedded in the bed of solids. However, to minimise equipment cost and simplify operations, such additional cooling step can be designed by using an equilibrium limited endothermic reaction such as the reverse water gas shift (41 kJ/mol), or preferably the steam reforming reaction of hydrocarbons, that are more endothermic per mol of reformed gas (for example, steam reforming of methane with an enthalpy of 206 kJ/mol).

As noted in previous paragraphs, the CO₂ partial pressure swing imposed on the atmosphere of gas around the solid during the calcination step ii) can be accomplished by feeding steam to the bed of calcining solids to achieve the effects of adiabatic cooling during calcination under the new partial pressures of CO₂ around the solids. The use of steam has the disadvantage of require additional steps of condensation to water in order to separate the CO₂ and will consume energy for evaporation. But it has the advantage of operating with minimum total pressure swings on the vessels, that will facilitate retrofitting of existing kilns to the methods of this invention. The use of steam in step ii) displaces the CO₂ evolved during calcination. Since the CO₂ will be at close to equilibrium conditions during step ii), the partial pressure of CO₂ at the exit of step ii) will change with time. This means that if the inlet flow of steam is constant, the exist flow during the step ii) will change (decrease) with time as the calcining solids experience the adiabatic cooling taking place in step ii). Such changes in flow rates may alter the operation of downstream equipment (for example heat exchangers, CO₂ purification equipment etc) and they should be preferably be avoided or minimised. Therefore, a preferred embodiment of all methods and devices using steam injection to undertake the CO₂ partial pressure swing in step ii) is wherein the molar flow of steam fed during step ii) is controlled to be proportional to the total flow of gas targeted at the gas exit during step ii) multiplied by the difference between the total pressure during step ii) and the equilibrium partial pressure of CO₂ on CaO, both divided by the total pressure. In this way, at the very beginning of step ii), the product gas from step ii) will be pure CO₂, and the concentration of CO₂ in said product gas will decrease with time to reach the equilibrium partial pressure of CO₂ at the temperature resulting from the 30-200ºC of adiabatic cooling occurring during step ii).

In previous embodiments of the process, it is possible to introduce short additional gas purging/rinsing steps for security and gas purity reasons. One particular additional step valid for all embodiments disclosed is characterised by the introduction an additional gas rejection step by which a gas volume of 1-3 times of the void volume of gas in the packed bed of solids is discharged at the beginning of the step ii). This action will avoid the mixing with steam and the pure CO₂ evolved during the calcination of CaCO₃ of the small mass of non-CO₂ gases present in interstices of the bed of solids at the beginnig of step ii).

### BRIEF DESCRIPTION OF THE DRAWINGS

The figures below reflect aspects for the practical execution of the process and facilitate the understanding of the main differences of the invention with respect to the state of the art, but they should not be considered as to limit the scope of the invention. Figures use numbers to name physical elements, devices and materials required to carry out the methods. Thick black arrows represent solid and gas mass streams entering/exiting the devices. The characterising sequences of steps of preferred embodiments are marked in roman numbers i), ii), iii), lasting a time being at least one of between a first time t1 to a fourth time t4, with the changes between steps marked with void thick arrows. Dashed line boundaries represent full cycles N of the process of this invention, containing several steps and sub-steps per cycle.
Figure 1 illustrates a single cycle (N) of the calcination process of this invention, having a sequence of a heating up step by combustion of a fuel (8) in air, enriched air, or O₂/CO₂ or O₂ (9) followed by a change in partial pressure of CO₂ around the calcining particle by feeding steam (100) and a calcination of a certain fraction of CaCO₃ (4), contained in a solid with CaO (5), to produce CO₂ (7) diluted in the steam (100).
Figure 2. Evolution of the temperature in the central core (T_{core}) of a limestone rock of 7 cm preheated 900ºC in pure CO₂ and submitted to a CO₂ partial pressure swing from the beginning of two calcination experiments. Dotted line is when the CO₂ partial pressure swing is achieved by feeding preheated air at atmospheric pressure and solid line is when applying vacuum (below 0.05 atm) to the vessel containing the rock.
Figure 3. Schematic representation of the calcination process of this invention when calcining pure CaCO₃ to CaO in seven CO₂ partial pressure swings of combustion and steam injection cycles on each stone, while feeding a batch of limestone (4) and extracting an equivalent batch of lime (5) in each cycle.
Figure 4. Schematic representation of a single shaft kiln to carry out the process of Figure 3 when changing the partial pressure of CO₂ in the calcination zone during step ii) by injecting steam (100).
Figure 5. Schematic representation of a double shaft kiln to carry out the process of Figure 3 during a cycle of combustion-steam injection, with combustion on the left shaft.
Figure 6. Schematic representation of a double shaft kiln to carry out the process of Figure 3 during a cycle of combustion-steam injection, with combustion on the right shaft.
Figure 7. Schematic representation of the calcination process of Figure 1 when combustion of the fuel (8) is carried out by chemical looping combustion, by oxidising the metal with air to MeO and regenerating the metallic solid fuel (Me) from its oxidised form by reduction with a fuel gas (8).
Figure 8. Schematic representation of the processes when there is an additional carbonation reaction step after each step of change in partial pressure of CO₂, regenerating the CaCO₃ decomposed during the step of change in partial pressure of CO₂ by the carbonation of CaO with CO₂ contained in a gas (13) reacting with part of the CaO (5) in the bed to give CaCO₃ (5).
Figure 9. Schematic representation of a packed bed temperature and pressure swing system to carry out the process of Figure 8 for enhanced water gas shift of a gas containing CO (13) using CaO as CO₂ sorbent.

### DETAILED DESCRIPTION OF THE INVENTION

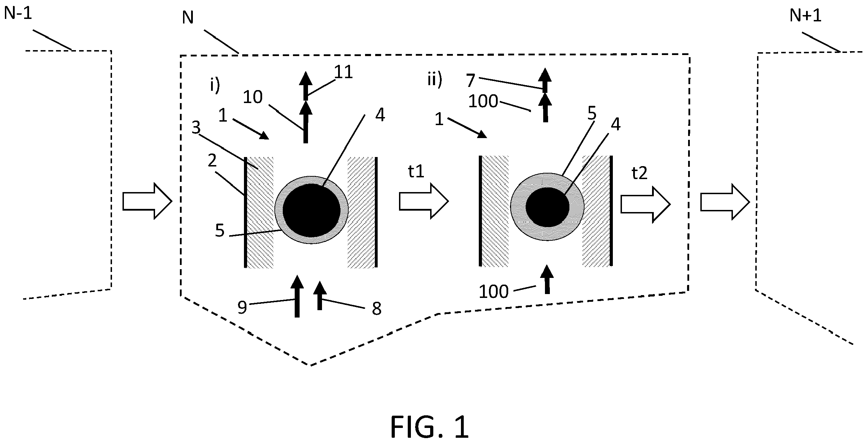

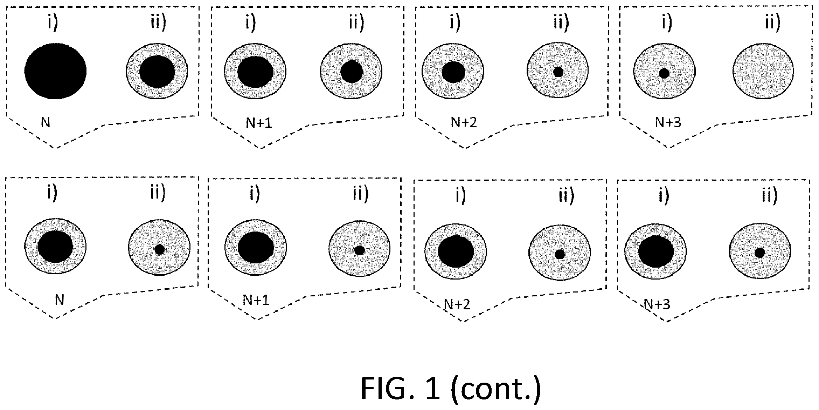

Reference is made from this point to the accompanying drawings to define preferred embodiments of the invention and provide evidence to support the claims from models using the state of the art of calcination and calcium looping reactions. Figure 1 represents the sequence of process steps of the invention. All other embodiments disclosed below comprises the steps disclosed in Figure 1, wherein the target of the process of this invention is to calcine solids containing CaCO₃ (4) to produce a pure stream of CO₂ (7) from the decomposition of CaCO₃ into CaO (5). In this invention, the problems associated with the use of vacuum swings are avoided, by conducting the step of calcination by injecting steam to a bed of CaCO₃ containing solids preheated to close to their equilibrium calcination temperature in pure CO₂. The new method is illustrated in Figure 1, representing the two steps of the invention for a single particle containing CaCO₃ (arbitrarily located in a central core (4) as a black circle) that is partially calcined to a particle containing a higher content of CaO (5), marked in grey. The particle is located in a thermally insulated vessel (1), with a metal enclosure (2) that is refractory lined (3). The thermally insulated vessel (1) allows the combustion, within the bed of solids containing CaCO₃, of a fuel (8) with air or other comburent mix (9), exhausting the flue gases (10, 11) containing CO₂ (11) and other gases (10) rich in nitrogen when the comburent gas (9) for combustion is air. A critical aspect of this invention is that, for each particle in the bed, the calcination occurs incrementally in cycles: N-1, N, N+1 etc. This means that a multiplicity of cycles is needed to achieve the complete molar conversion of CaCO₃ to CaO of an individual limestone particle. For simplicity, only 4 of those cycles (N=1 to N=4 for each particle) are represented in Figure 1. In a continuous process where N runs indefinitely, with a continuous supply of limestone particles to the thermally insulated vessel used for calcination and the continuous extraction of an equivalent flow of lime particles, an individual particle would enter the vessel (1) in cycle N and abandon the vessel in a cycle higher than N+4, to achieve full calcination as in the illustration of Figure 1.

Alternatively, the content of the CaCO₃ in the original solid undertaking a partial calcination in cycle N may be the result of a previous carbonation process step (not shown in Figure 1 for simplicity in the N-1 box). This is common practice in existing calcium looping processes for CO₂ capture, where individual CaO sorbent particles ideally operate indefinitely in reversible carbonation-calcination cycles. For simplicity, only 4 of those reversible cycles are represented in Figure 1 (N to N+3), showing only the two characterising steps of the invention for each cycle.

Therefore, the process of this invention comprises the partial calcination of CaCO₃ containing solids in repetitive cycles, N, characterized by each cycle having a sequence of at least these two steps as represented in the top of Figure 1:
i) a heating up step involving a fuel combustion, preferably lasting a first time (t1) between 5-20 minutes, burning a fuel (8) within the bed of solids, using air or other comburent mix (9) such as enriched air, or O₂/CO₂ or O₂, to heat up the bed of solids containing CaCO₃ to an average temperature of between 800-950ºC. The design objective of this combustion step is just to heat up the solids, with a minimum calcination degree.
ii) A CO₂ partial pressure swing step, preferably lasting a second time (t2) between 5-20 minutes, by feeding a flow of steam (100) to the bed of solids, to promote the calcination of CaCO₃ (4), giving as reaction products pure CO₂ (7) diluted in steam (100), and CaO (5), and causing a temperature drop in the bed of solids of between 30-200ºC. As discussed in the state of the art, any sudden CO₂ partial pressure swing (for example by substituting the gas atmosphere around the calcining particles by vacuum or by an inert gas to the calcination reaction like steam) will generate adiabatic cooling during adiabatic calcination of CaCO₃ containing solids.

The maximum temperature drop at the end of the adiabatic cooling taking place in step ii) will be limited by the adiabatic temperature of calcination considering the partial pressure of CO₂ in the CO₂/steam gas mixture surrounding the calcining particles. However, the effective temperature drop depends also on many factors linked to the kinetics of calcination of the CaCO₃ containing solids (porosity of the solids, particle diameter etc) that will influence the actual partial pressure of CO₂ in the calcination reaction front, considering the resistances that such CO₂ calcination flow will experience to abandon such calcination front to reach the bulk gas space between particles. Since the CO₂ partial pressure swing is achieved by feeding steam to the calcining solids at close to atmospheric pressure, the partial pressure of CO₂ in the product gas will adjust rapidly to the equilibrium partial pressure of CO₂ on CaO at the temperature resulting from the adiabatic cooling of the solids. For example, if the solids have been heated up to 900ºC in step i), which is the equilibrium temperature of pure CO₂ on CaO, the CO₂ evolved from calcination will first tend to displace any other gas in the free volumes of the bed of CaCO₃ containing particles. The injection of a small flow of steam will be initially sufficient to extract such CO₂ gas from the bed, and the partial pressure of CO₂ in the gas stream leaving the reactor in step ii) will be close to unity. In contrast, towards the end of step ii) when an adiabatic cooling of between 30-200ºC has taken place in the bed of solid due to adiabatic calcination, the partial pressure of CO₂ in the product gas (stream of CO₂ (7) plus stream of steam (100)) will be low (for example: 0.09 is the partial pressure in atm of CO₂ on CaO at the 750ºC that would be reached when the adiabatic cooling was 150ºC respect to the initial 900ºC)

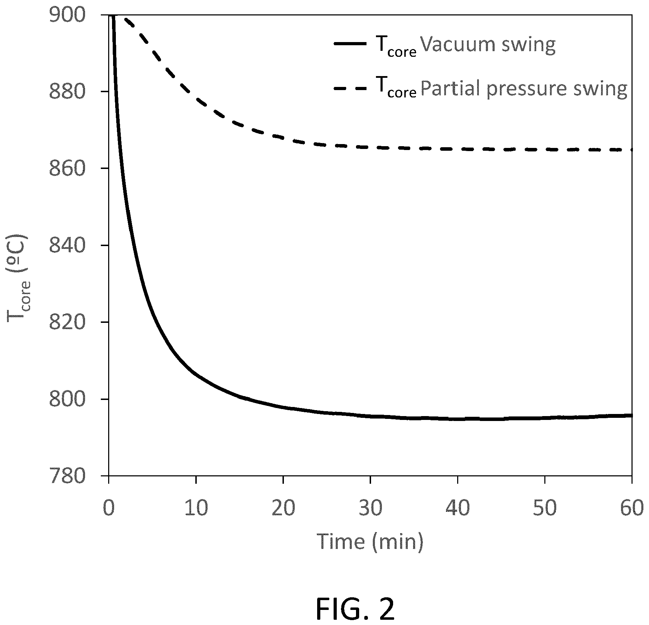

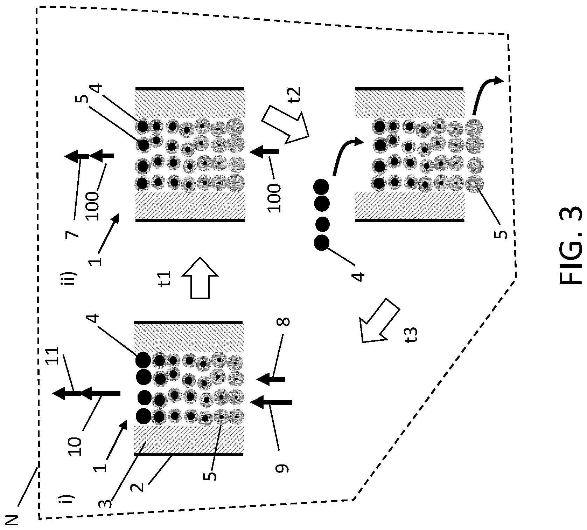

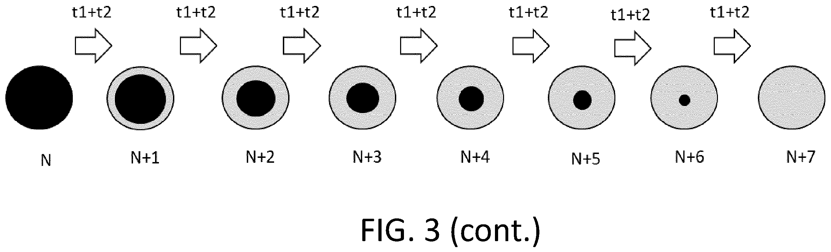

As known in the state of the art, the effects of a CO₂ partial pressure swing around the calcining particles are similar when applying vacuum pressure swings than when changing the partial pressure of CO₂ around the calcining solids by displacing the CO₂ from calcination with an inert gas respect to calcination. For example, Figure 2 shows that in the first 5-10 minutes after a rapid swing to reduce partial pressure of CO₂ around a rock of limestone preheated to 900ºC, there is a very rapid cooling in the interior of the stone (T_{core} decreases with time) when the CO₂ partial pressure around the rock is forced to decrease by switching to an air flow (i.e., displacing the CO₂ initially surrounding the rock at 900ºC) or by applying a vacuum pressure to the vessel where the stone is contained. The temperatures in the core of the stone, T_{core} in Figure 2, reach a stable value after about 20 min. At such stable value, the adiabatic cooling produced by the calcination of CaCO₃ at the calcination front of the uncalcined core must be equal to the heat transferred from the surroundings of the stone to the calcination front. This explains the difference in the cooling measured when applying vacuum (T_{core} down to about 795ºC) than when displacing the CO₂ with air (T_{core} down to just 870ºC): heat transfer towards the calcining stone must be more effective when flowing air to the vessel containing the stone than when applying vacuum. However, Figure 2 illustrates that any partial pressure swing that decreases the CO₂ partial pressure around a mass of CaCO₃ preheated to be in equilibrium with CO₂, will translate into a certain adiabatic cooling of the CaCO₃. These results are consistent with the observations by Hills (1968, Figure 3) working with smaller (1 cm diameter) particles.

It has been demonstrated using heat transfer models for calcining stones, that in reasonable heating up times (5-20 minutes), it is possible to transfer the necessary heat to the solids containing CaCO₃ to heat them up by 30-200ºC and bring them back to an average temperature of 800-950ºC. Such temperature is the necessary to re-initiate a new CO₂ partial pressure swing cycle step, where temperatures will drop again between 30-200ºC (causing a decrease of molar CaCO₃ content between 0.01 and 0.07) in the solids. Calcination rates under the reduced CO₂ partial pressures in step ii) are sufficiently fast to complete an incremental calcination molar conversion of 0.01 and 0.07 in just 5-20 minutes of CO₂ partial pressure swing step, reaching at the end of the step ii) CO₂ partial pressures of CO₂ in the product gases (containing CO₂ (7) and steam (100)) between 0.05-0.5 atm of CO₂. A reduction of CO₂ partial pressure at the end of step ii) has the benefit of a larger drop in temperature during calcination, and a reduced number of cycles of steps i) and ii). But this benefit comes at the expense of a higher steam consumption to generate such low CO₂ partial pressures and by using more operation time to extend the calcination period to points of reduced partial pressure of CO₂ and increased partial pressure of steam in the product gas. Moderate CO₂ partial pressure swings will demand for higher temperatures of heating of the carbonated solids and/or higher number of CO₂ partial pressure swings cycles, as the drop in temperature of the solids will be limited by the equilibrium temperature imposed by the CO₂ partial pressure swing (for example, for 0.5 atm of partial pressure of CO₂, it will not be possible to lower the temperature below 850ºC during step ii) as this is the equilibrium temperature of CO₂ on CaO at such partial pressure of CO₂).

Taking the previous constrains into account, a preferred embodiment of the process of this invention allows the calcination in continuous mode of a flow of limestone (4) and the extraction of an equivalent volumetric flow of lime (5). The schematic of each single cycle N of the process is presented in Figure 3. In this case, the vessel in the process (1) contains a multiplicity of particles arranged in a packed bed form. In the example of Figure 3, batches of limestone (4) are periodically charged to the top of the vessel after step ii) and a volumetrically equivalent batch of fully calcined material is extracted at the bottom of the bed. This allows the preheating of the limestone solids to the temperatures required at the beginning of step i) with the sensitive heat of the combustion flue gases (10 and 11) produced during the step i), and the preheating of the large flow of air or other comburent mix (9) in contact with the high temperature CaO leaving the thermally insulated vessel (1). Each cycle N will last the sum of the first time (t1) under the combustion step and the second time (t2) of the CO₂ partial pressure swing step producing by feeding steam (100), plus a third time (t3) required to replace a batch of limestone (4) and extract the CaO product (5). Optionally, the third time (t3) can be made zero if such operation of discharge of solids is carried out simultaneously with the combustion or heating up step i).

Figure 4 represents in schematic form a full system to carry out the process of this invention in a limestone shaft kiln. The kiln includes a refractory (3) lined external wall (2) to sustain high temperature operations in the interior of the bed of stones, lock-hoppers connected to a feeding valve (24) and an extraction valve (25) of solids and a number of gas switching valves (101, 21, 22, 23, 201) installed in all inlet and outlet gas pipes. At least one of the pipes (usually the pipe of flue gases (10, 11)) comprises a T pipe diversion, with a valve (201) to divert product gas (7, 100) during calcination. Such kiln will typically contain a preheating zone (30) for limestone (4) at the top of the kiln and an air preheating section (31) at the bottom of the kiln that cools lime product (5) with air or other gases in the comburent mix (9). The process requires a moving bed step iii) after the step ii) in which the bed of solids moves downwards in the kiln by extracting a batch of CaO product (5) at the bottom of the air preheating section of the kiln while charging a batch of limestone (4) at the top of the limestone preheating section of the kiln. The process operates with a sequence of operation periods characterized by the positions of the switching valves as indicated in Figure 4: a period of step i) lasting a first time t1=5-20 minutes with a valve (21) opened for the emission of CO₂ produced during the fue combustion (11) mixed with the flue gases (10) from combustion, a valve (22) opened for the entry of a fuel (8) and a valve (23) opened for the entry of the comburent gas containing air, enriched air, or O₂/CO₂ or O₂ (9), and the valve (201) to divert product gas (7, 100) during calcination, the feeding valve (24) and the extraction valve (25) closed. After the period of step i), it follows a period of step ii) lasting a second time t2 between 5 and 20 minutes with all valves closed except the valve (201) to divert product gas (7, 100) during calcination and the steam valve (101) to feed steam (100) to the bottom of the calcination zone (1). The flow of steam (100) must enter the kiln at a temperature sufficiently high (>550ºC) to prevent risk of hydration of the CaO. For simplicity, in this configuration, the step iii) is taken in in a short period when all valves are closed except the feeding valve (24) and the extraction valve (25) of solids. It is possible to carry out small changes in this strategy to overlap the step iii) with a certain period during steps i) or ii). Other small variants of the process may refer to the feeding point of the comburent mix (9), for example to avoid the recarbonation of CaO when (9) is a comburent mix of O₂/CO₂, following the teachings of other oxy-fired shaft kilns.

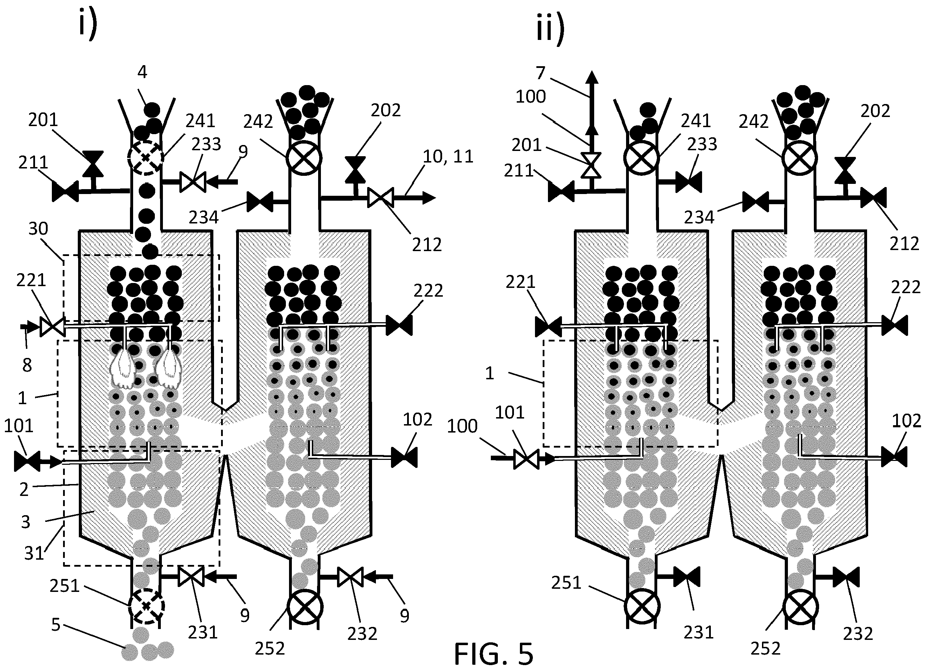

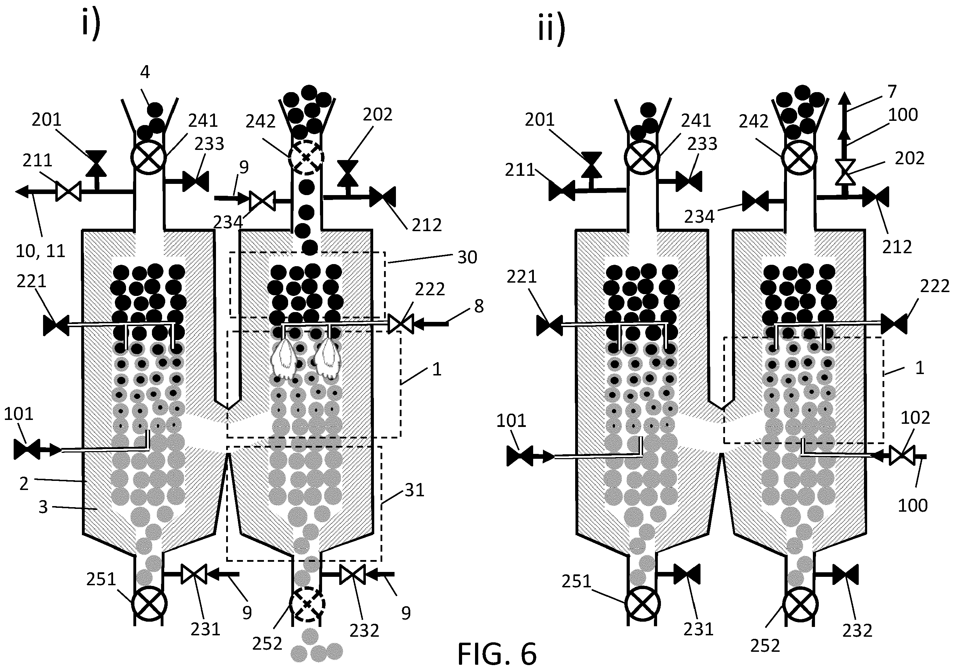

Figure 5-6 is a schematic representation of a double shaft kiln operating with the characteristic process steps of this invention as shown in Figure 3. The number of the valves and other minimum mechanical elements have changed respect to the single shaft of Figure 4 but the process is the same. For simplicity, we have chosen in Figures 5-6 to arrange the charge and discharge of solids during the step i) (i.e. the step iii) is no longer a separate step as in Figure 4), as a system of rotary valves (241 and 242 for charging, and 251 and 252 for discharging, operating on the left or right shafts as indicated in Figure 5 and 6). These valves, together with lockhoppers can prevent the scape of gases through the solid feeding and extraction lines while burning a fuel in one of shafts during step i) or when feeding steam during step ii). The process operates with a sequence of operation periods characterized by the positions of the switching valves as indicated in Figure 5 when the combustion step i) takes place in the shaft of the left and as in Figure 6 when the combustion step i) takes place in the shaft on the right. Also for simplicity, we have assumed that the comburent gas (9) used during combustion step i) is air. Skilled in the art of oxycombustion in shaft kilns will now how to adapt the drawings to kilns using other comburent gases (9) such as enriched air, O₂, or O₂/CO₂, to maintain the high thermal efficiencies characteristic of double shaft kilns.

Figure 5 shows a period of step i) lasting a first time t1=5-20 minutes with valves (231, 233) opened for the entry of air (9) to allow combustion of the fuel (8) in the left shaft by opening the valve (221) for the entry of the fuel (8) while the right shaft operates in regenerative mode with the valve (232) opened for the entry of air (9) and the valve (212) opened for the emission of CO₂ (11) mixed with the remaining flue gases (10) from combustion. A valve (201) to divert product gas (7, 100) during calcination, a valve (211) in the left shaft for exhausting the flue gases containing CO₂ (11) and flue gases (10), a valve (234) for the entry of air a the top of the left shaft, the rotary valve (242) that prevents the scape of gases through the solid extraction line and the rotary valve (252) that prevents the scape of gases through the solid feeding line of the right shaft are all closed. The combustion step i), taking place in the left shaft only, is followed by a step ii) lasting a second time t2 between 5 and 20 minutes with all valves closed except the valve (201) opened to divert product gas (7, 100) during calcination and the valve (101) opened to allow the feedig of the steam that causes the CO₂ partial pressure swing. Figure 6 shows the next cycle of steps i) and ii) characterised by a burning period in the right shaft. Following the known operating principles of double shaft kilns to reach higher thermal efficiencies, the new combustion step i) involves the burning of the fuel (8) in the shaft located in the right hand side of the kiln, with the following valves opened: the rotary valve (242) that prevents the scape of gases through the solid feeding line, the rotary valve (252) that prevents the scape of gases through the solid extraction line, the valves (231, 232, 234) for the entry of air (9), the valve (222) for the entry of the fuel (8) and the valve (211) for the emission of CO₂ (11) mixed with the other flue gases (10) in the comburenty mix. The other valves are closed during such step i): the valve (202) to divert product gas (7, 100) during calcination, the valve (241) that prevents the scape of gases through the solid feeding line of the left shaft, the rotary valve (251) that prevents the scape of gases through the solid discharge line, and the valves (201, 202) that allow extraction of CO₂ (7) and steam (100). The CO₂ partial pressure swing in step ii) is in this case applied to the calcination zone (1) in the right hand side shaft, by feeding steam (100) when opening a valve (102) for the feed of steam and extracting a gas product (composed of CO₂(7) and steam (100)) by opening a valve (202) for extracting the CO₂ (7) and steam (100). The rest of valves are closed during such step ii).

It must be noted that kilns of Figures 4-6 are able to recover CO₂ (7) after condensation of the steam (100) (heat exchangers or condensers to do such downstream steps are omitted for simplicity). However, these methods are not able to recover the CO₂ evolved during the combustion of the carbon contained in the fuel (8). Such CO₂ (11) is emitted mixed with the nitrogen rich flue gases (10) evolved during the combustion of the fuel (8) with air or other comburent mix (9) (unless such comburent mix is pure O₂ and CO₂).

The application of the process of this invention to the calcination of limestone in a shaft kilns is non-restrictive. There are a number of CO₂ capture processes by calcium looping requiring calcination of carbonated solids (formed during the carbonation of CaO with CO₂ in a flue gas or fuel gas), to generate a pure stream of CO₂. These processes can benefit from the sequence of steps for calcination disclosed in this invention. In particular, there is a familly of calcium looping processes that include cyclic operations in adiabatic packed beds (1) of solids (4, 5) that do not move in the bed, and that rely on the capture of CO₂ by the reversible carbonation of CaO (5) to form solids containing CaCO₃ (4), followed by the calcination of the formed solids containing CaCO₃ (4) to produce concentrated CO₂ (7) and regenerate the CaO sorbent (5). Example of such processes are sorption enhanced steam reforming process ofnatural gas and other hydrocarbons (including biogas) using CaO as a sorbent to displace reforming reactions towards hydrogen production. Also, sorption enhanced water gas shift using CaO as sorbent to displace the water gas shift equilibrium towards the production of H₂.

In order to understand the relevance of this invention for the technical viability of such calcium looping processes, it is important to highlight here the following aspects:
- It has been widely demostrated that the capability of CaO from natural sources as a fully reversible CO₂ sorbent is limited to a maximum calcium conversion to CaCO₃ of just 0.03 to 0.1. In addition, the necessary mixing of Ca-based solids with the second solid containing the reforming or water gas shift catalyst and its support will bring down the effective weight content of active CaO in the bed to just 1-5%w of the total bed, with the remaining 95-99% of the bed mass being a thermal ballast during the carbonation or calcination reaction steps in the calcium looping process.
- The optimum temperature window for fast and efective carbonation of CaO in CO₂ capture systems by Calcium Looping at atmospheric pressure is usually 600-700ºC, which also allows high CO₂ capture efficiencies (>90%) because of the low partial pressure of CO₂ in equilibrium with CaO (for example: 0.012 atm at 650ºC). Increasing operating pressure allows the operation at higher temperatures, but at the expense of higher cost and energy requirements. On the other hand, the fast and effective calcination of CaCO₃ requires temperatures approaching 950ºC under CO₂-pure atmospheres, and despite the swing in CO2 partial pressure during step ii), such step requires to start at temperatures between 800-950ºC as discussed above.

Therefore, even small heat losses in the system would make impossible to reach the calcination temperatures at the beginning of step ii) by relying only on the energy released during the carbonation of Cao in step iii). This worsens when taking into account the heat balance affecting incoming low temperature gas reactants and high temperature gas products, which usually demands for additional heat inputs to the system. Therefore, the method of this invention is a solution to close the heat balances and the temperature gaps between carbonation and calcination temperature conditions in calcium looping processes. It can be demonstrated (see Example 2) that the method of this invention allows the use of known CaO sorbent materials, i.e., with effective weight content of active CaO in the bed to just 1-5%w of the total bed, by exploiting the role of the 95-99% remaining bed mass as a thermal ballast that can store as sensitive heat released during step i) and provide the necessary energy for calcination during step ii).

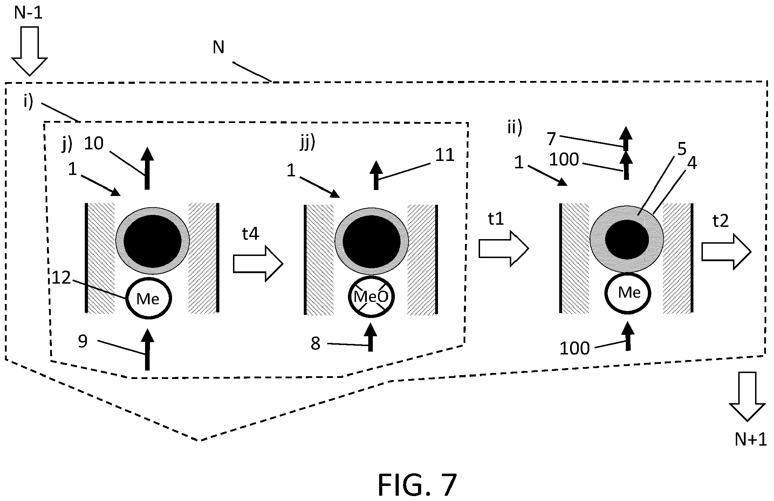

In view of experimental results and discussions above, a preferred embodiment of this invention (see Figure 7) is characterised by conducting the combustion step i), by following chemical looping combustion principles to burn the fuel (8) with air (9) using a solid oxygen carrier (MeO/Me) mixed in the bed of solids containing CaCO₃. The combustion step i) in the bed of carbonated solids is carried out in two separate sub-steps:
j) a first sub-step lasting a fourth time (t4) being lower that the first time (t1) where the metal (Me) contained in the second solid (12) is oxidised to MeO by reacting with a comburent gas (9) and releasing a flue gas (10) (that will be nitrogen-rich when the comburent gas is air); and
jj) a second sub-step lasting the difference between the first time (t1) and the fourth time (t4), i.e., t1-t4, where the MeO produced in step j) is reduced back to metal (Me) while oxidising the fuel (8) to the combustion products rich in CO₂ (11).

Such sequence of sub-steps j) and jj) will produce the heating-up of the bed of solids containing CaCO₃ in a more even and distributed manner than what would be the case if direct combustion of the fuel (8) with air (9) had been carried out in the bed in a single step i). This is important in these applications, because having low CaCO₃ content in the bed (<5%w of active CaCO₃) the appearance of flames and other hot spots in the bed would translate into the unwanted local calcination of CaCO₃ and local overheating during step i), while leaving other parts of the bed not sufficiently heated during step i), which would prevent the targeted calcination and CO₂ production during step ii).

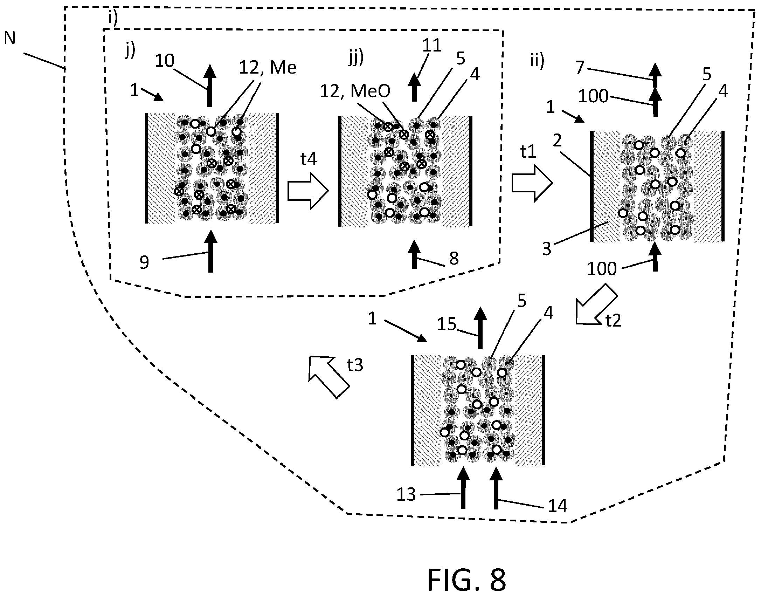

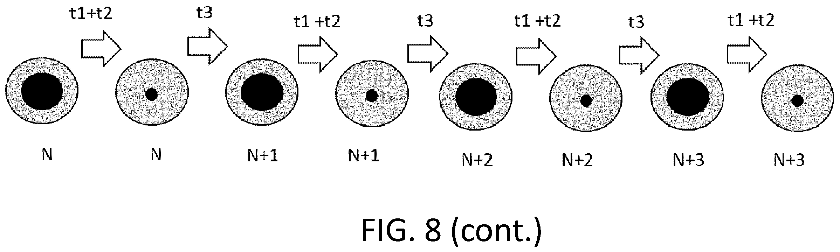

As indicated in Figure 8, and following the teachings of chemical looping combustion in packed beds, the oxidation reaction of metal (Me) (white circles) to MeO (marked with a cross on the white circles) will progress in neat reaction fronts moving upwards as the process step j) advances with time. It is well known from similar processes that this oxidation step can be a very brief reaction step (the fourth time (t4) being between 1-3 minutes) that will leave the whole bed of solids hotter behind the oxidation reaction front, depending on the nature and mass content of the metal (Me) oxidising to MeO (see Example 2 below). Therefore, the process of Figure 8 follows the sequence of Figure 1 and Figure 7 in the sense that a partial calcination of CaCO₃ is taking place in each cycle of steps i) and ii) (or in other words, a drop of 0.01 to 0.1 in CaCO₃ molar fraction of the Ca-sorbent in the bed after the sum of the first time (t1) and the second time (t2), with the first time (t1) being the sum of the fourth time (t4) and the difference between the first time (t1) and the fourth time (t4), i.e., t1-t4. For simplicity, the carbonation step and any other reaction or bed conditioning step taking place in the bed of solids is assumed to last the third time (t3), as this will reversibly bring the bed to its initial status to re-start a new cycle in the calcium looping process. Such carbonation reaction step will take place by feeding a carbon containing gas (13) to the packed bed of solids. A carbonation reaction front will develop in the bed during such process when the gas containing CO₂ meets a layer of CaO not yet carbonated to CaCO₃. Such carbon containing gas can be a flue gas containing CO₂ or a fossil fuel gas or biogas that can react with steam (14) to generate CO₂ during reforming and water gas shift reactions. In both cases (i.e., sorption enhanced reforming or sorption enhanced water gas shift), and as noted above, there will be a modest increase in the molar conversion of CaO to CaCO₃ between 0.01 and 0.1 when using low cost CaO materials from natural limestone. The carbonation step can be carried out at high pressure by feeding the gases (13) and (14) at high pressure, so as to enhance the carbonation of CaO, increase the CO₂ capture efficiency and allow higher temperatures of the bed of solids containing CaCO₃ at the end of the carbonation step, thereby reducing the fuel requirements in step i) to heat up the bed of solids containing CaCO₃ to the initial temperature of step ii). The application of the sequence of the steps i) to ii), with the step i) subdivided in the step j) and the step jj) will allow to connect the temperature gap between the desired reaction steps in these calcium looping processes, as discussed in Example 2 below.

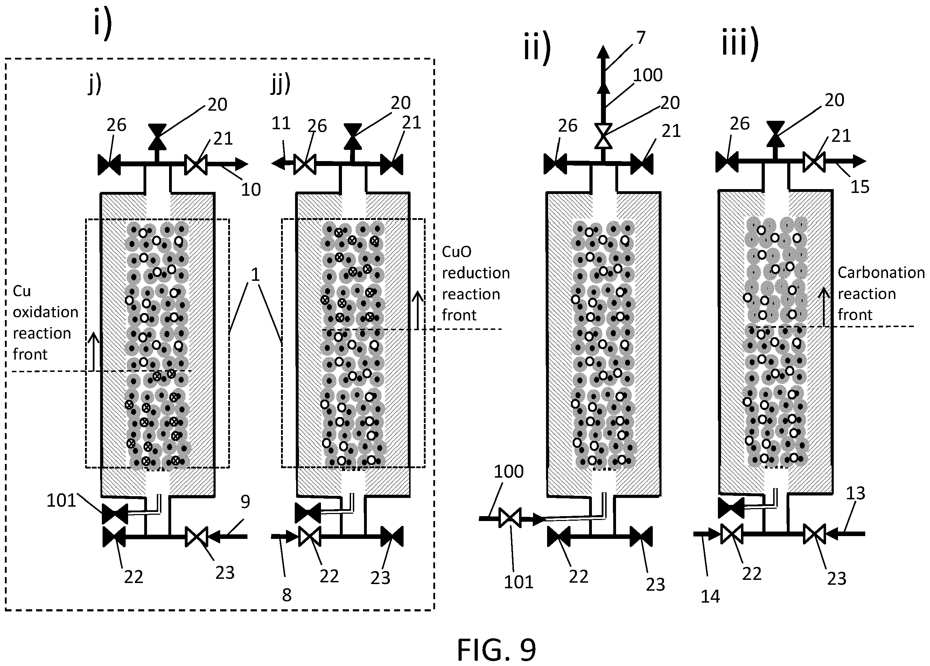

Examples 2 is provided below by using a preferred embodiment of this invention as represented in Figure 9. This is characterized by the combustion taking place in (1) during heating up step being an indirect combustion of a fuel (8) with air (9) by exploiting the dual role of Cu as oxygen carrier for the indirect combustion of a fuel (8) with air (9) in step i) and as catalysts for sorption enhanced water gas shift reactions. Variation of this embodiment also included in this invention is the adaption of other sorption enhanced processes using Ni or other catalyst (generically marked as Me and MeO in Figure 7 and 8). Other variations affect the choice of pure O₂ or O₂/CO₂ mixtures as comburent gas (9) in step i).

In all previous embodiments of the process, short additional gas purging/rinsing steps for security and gas purity reasons, for example using additional steam or nitrogen as inert gases, can be introduced.

### EXAMPLES

Mass and energy balances are solved in the three examples below to illustrate the application of the calcination method disclosed in this invention to calcine solids containing CaCO₃ into CaO and a pure stream of CO₂ in a shaft lime kiln (Example 1), and a calcium looping process for calcium-enhanced water gas shift (CASOH) catalysed by Cu to produce H₂ from Blast Furnace Gases and pure CO₂ (Example 2). For simplicity, the following thermodynamic parameters are assumed to be constant with temperature and representative of the enthalpies involved at the temperature intervals considered in the examples: enthalpy of calcination and carbonation = ±170 kJ/mol Ca; enthalpy of WGS=-34 kJ/mol CO, enthalpy of steam methane reforming=190 kJ/mol CH₄, enthalpy of Cu oxidation=-145 kJ/molCu, enthalpy of CuO reduction= -54.5 kJ/molCu with CH₄, - 100 kJ/molCu with H₂, -140 kJ/molCu with CO, enthalpy of blast furnace gas combustion= 2600 kJ/kg, enthalpy of methane combustion= 50000 kJ/kg, heat capacity of all solids=0.8 kJ/kgK; heat capacity of blast furnace gas=1.35 kJ/kgK, heat capacity of H₂/N₂ product gas from SEWGS=1.6 kJ/kgK, heat capacity of CH₄=4.1 kJ/kgK, heat capacity of H₂O=2.2 kJ/kgK and heat capacity of the rest of gases=1 kJ/kgK. The displacement of reaction and heat transfer fronts are calculated assuming infinite reaction rates and infinite solid-gas heat transfer rates. The skilled in the art will be able to refine the calculations provided below and adapt them to other conditions. The examples are therefore only illustrative and non-restrictive.

### EXAMPLE 1 (Lime vertical shaft kiln)

Figure 4 is used as reference. This example is calculated to show the application of the method to a lime single shaft kiln designed to produce an average target flow of 1 kg CO₂/s (7) during the step ii), using a first time (t1) of 10 min duration for the combustion step and a second time (t2) of 15 min for the CO₂ partial pressure swing step. This example can be adapted to double shaft kilns as in Figures 5 and 6. Indeed, the chosen durations of step i) is consistent with typical combustion time periods in double shaft kilns to achieve similar objectives regarding heat transfer efficiencies between gas and solids etc. It is first assumed that the efficiency in the capture of CO₂ during step ii) is 80% (the remaining CO₂ evolved from calcination is considered to be lost with the flue gases during step i)). This means that there is a flow of 1.70 kg/s of limestone (assumed to be pure CaCO₃) entering the kiln. Staged combustion during the heating up step i), (represented by 2 flames in the calcination zone (1) of the kiln) is assumed in the calcination zone. In this example, it is assumed that the feeding of limestone (4) and removal of lime (5) take place before the combustion step i) (see Figure 4). The complete calcination of the limestone to lime (0.95 kg CaO/s) demands a minimum of 3.0 MJ/kg of CaO, which translates into a minimum average power requirement for calcination of 2.85 MW during whole cycle. In the kiln of this example, if the flow rate of lime is to be maintained, the thermal input must be supplied to the shaft kiln in a shorter time, only during the combustion step i). This means that a thermal input for calcination of 7.12 MW is needed during the step i). In order to solve the energy balances in the limestone and air preheating zones (30, 31), it is assumed that limestone (4) and oxygen enriched air are fed at a temperature of 20 °C meanwhile lime (5) and flue gas (10, 11) leave the kiln at 50 ºC. Moreover, a temperature of 950 ºC has been assumed for the gas and solid streams leaving the calcination zone (1). A flow of 0.17 kg/s of methane is therefore calculated to be sufficient to compensate calcination energy requirements, a characteristic value of 10% to account for heat losses, and the sensitive heat leaving in the mass flow outlets of CaO and flue gases. A low excess ratio of 5% and an oxygen concentration of 45%v in the oxygen enriched air (9) have been used in the calculations above.

The assumption of an enriched air with oxygen concentration of 45%v facilitates in this particular example an efficient closure of mass and energy balances in a single shaft kiln, because the flow rate of gases at the exit of the calcination zone contains sufficient energy to preheat the incoming limestone flow to said calcination zone. Assuming a typical superficial gas velocity of the combustion flue gases of 1.5 m/s in the calcination zone, this yields a cross-section for the kiln of 4.5 m². This translates into an average superficial solid velocity moving downwards in the kiln of 0.0004 m/s during each cycle. Assuming a void fraction not occupied by stones of 0.4, an average density of 2000 kg/m³ for the solids and a total height of 8 m for the calcination zone (1, as in other kilns), a total amount of solids of around 29000 kg can be estimated in this calcination zone of the kiln. This translates into a total residence time of the solids in the calcination zone (1) of 6.2 h. Such long residence time in the calcination zone is within the range of stone residence times in existing kilns and can be tuned to adapt it to particle size of the stones and calcination rate parameters of the stone. It is shown below to be sufficient to achieve a calcination degree close to 100% in view of known models of limestone calcination rates.

During each stage under the combustion step i) in the kiln, the previous heat and mass balances indicate that approximately 115 kJ/kg of solids in the calcination zone are absorbed during on average in each combustion step i). After such combustion period is completed, the valve (22) for the entry of a fuel (8), the valve (23) for the entry of air (9), and the valve (21) for the emission of CO₂ (11) mixed with the nitrogen rich flue gases (10) are closed and the steam valve (101) to feed steam (100) to the bottom of the calcination zone (1) and the valve (201) to divert product gas (7, 100) during calcination are opened to initiate step ii). The 15 min duration of step ii) allows for a conversion of CaCO₃ to CaO of 6.9%wt during the step ii), consistent with known models of calcination. Therefore, a minimum total of 12 combustion/partial-pressure-swing-by-steam cycles will be required for the stones in the calcination zone to achieve their full calcination. Since each cycle lasts the first time (t1) plus the second time (t2), i.e., t1+t2=25 minutes, the accumulated time required for the particles to fully calcine is 4.9 h. This calcination time is lower than the residence time of the solids in the calcination zone (estimated to be 6.2 h above). Thus, ensuring the full calcination of the limestone fed into the kiln under these assumptions, that are consistent with the state of the art in existing lime kilns.

A temperature drop of 115 ºC of the solids is estimated during the steam partial pressure swing step. This would result into a decrease of the equilibrium partial pressure of CO₂ from 1.0 atm at the beginning of the step to 0.17 atm at the end. Moreover, it is assumed that the cooling of the solids during this step in the calcining zone is constant with time. A total amount of 900 kg CO₂ are calcined in each CO₂ partial pressure swing step. As result, a variable flow of steam (100) from 0 up to 0.89 m³N/s would be needed to maintain a total flow of 1.1 m³N/s at the exit of the calcining zone (1). This would translate into an average gas velocity of 1.0 m/s in the calcining zone.

For an equivalent single lime shaft kiln with no CO₂ capture, operating with the same conditions in the calcination zone, with the same gas and solid flows inlet temperature and heat losses, a maximum thermal input of 3.8 MW can be calculated when using air as comburent, leading to a maximum flow of lime of around 0.84 kg/s. This shows that the method disclosed in this invention to obtain a pure stream of 1kg/s of CO₂, could be implemented in existing shaft kilns without reducing the lime production capacity, when oxygen enriched air is used a comburent and the kiln is retrofitted with additional equipment required for steam injection (100) represented in Figure 4, steam condensation (not represented in Figure 4 for simplicity), and switching valves in a similar way as described above.

### EXAMPLE 2 (CASOH process with CO₂ pressure swing calcination with steam)

The method of this invention is applied to a calcium-enhanced water gas shift process (CASOH) to treat Blast Furnace Gas (BFG) from a steel mill plant and generate a H₂-rich gas while carbonating CaO to CaCO₃ in a packed bed. The process is carried out in a system composed of several adiabatic packed-bed reactors operating in parallel in different reaction steps, to allow the continuous treatment of gas streams. Figure 9 is used as a reference. As in the previous example, an average flow of 1kg/s of pure CO₂ (7) and steam (100) is recovered during step ii), and is used as a reference for calculations. It is also assumed that BFG is composed of 23%v CO, 24%CO₂, 5%H₂ and 48%N₂. The CaO-based material has 4.5%w of active CaO. In this particular example, the Cu-based material also present in the bed has 5%w of Cu on an inert support. Cu is assumed to be able to oxidise completely to CuO in sub-step j) and reduce back to Cu in step jj) as indicated in Figure 9. These material compositions are available in the state of the art of chemical looping combustion and water gas shift catalytic processes. For the calculations, it has been assumed that the thermally insulated packed-bed reactors (1) are 10 m long, with 2.2 m of inner diameter and a bed density of 1500 kg/m³.

The reactor contains a mixture of solids with a molar ratio of active Cu/CaO components of 0.10 when combining the CaO sorbent with the Cu-catalyst with 5%w of Cu. This means 4.1%w of active CaO, 89.6%w of inert CaO, 0.3%w of Cu and 5.9%w of Cu-catalyst support.

The CASOH process works cyclically, and the description can therefore be initiated from any step. Since the application of the method of this invention (steps i) and ii) in Figure 9) requires a packed bed of solids containing CaCO₃, it will be firstly described the step involving the generation of CaCO₃ in the bed (CASOH step represented as iii) in Figure 9). When such a calcium-enhance water gas shift reaction starts, the bed is loaded with about 57000 kg of solids and is at 770ºC, as a result of a previous calcination step (see below). To carry out the CASOH step, the valve (22) and the valve (23) are opened to allow the feed of steam (14) and BFG (13), respectively. A flow of 2.3 kg/s of BFG (13) (i.e., 6 MW_{LHV} of thermal input) is mixed with 0.63 kg/s of steam (14) to obtain a steam-to-CO molar ratio of 2 in the mixed feed to the reactor; with the valve (21) also opened to allow the extraction of the CASOH H₂ rich product gas (15). For simplicity, the gas mixture (13, 14) is assumed to be fed into the reactor at the same temperature of the solids (770ºC) and at 5 bar. These conditions allow first a very fast water gas shift reaction of CO with H₂O to form CO₂ and H₂ catalysed by the Cu-based solids. CO₂ reacts with active CaO to form CaCO₃ as soon as it is produced, which shifts the water gas shift equilibrium towards a higher production of H₂. The enhanced water gas shift of CO in the presence of CaO is exothermic. For simplicity, the increase in temperature in the reaction fronts and the velocity at which both reaction and heat exchange fronts advance through the packed beds are calculated assuming sharp reaction fronts and negligible resistance to mass and heat transfer during the operation. When such gases reach the region containing active CaO solids, the exothermic carbonation occurs in a sharp carbonation front and the carbonation front achieves a maximum temperature of 902ºC. The low content of active CaO in the bed makes the carbonation front moves forward fast, leaving behind the carbonated solids at 902ºC, while the product gas (15) obtained during the duration of this step iii) (the product gas is 1.52 kg/s composed of 24.8%v H₂, 2.5%v CO, 2.6%v CO₂,46.9%v N₂ and 23.2%v H₂O) is discharged at 770ºC (i.e., the initial temperature the packed bed). After approximately 25 minutes of operation in these conditions, the active bed of solids reaches total carbonation, and the packed bed is left at 902ºC. As the gases (13, 14) are assumed to enter at the same temperature, there is not a temperature profile at the bottom of the reactor.

As indicated in Figure 9, the method for this example continues with the heating up step i) of the bed of solids containing CaCO₃ by combustion of a fuel (8) (in this example BFG is also used for this purpose, but other fuel gases would be feasible for the heating up step). The combustion of a fuel gas (8) in step i), is divided into two sub-steps: j) and jj). In the sub-step j), the oxidation of the Cu-based solids to CuO is carried out with pure oxygen (9) (the oxidizing gas can also be air, enriched air or O₂/CO₂). Because of the low content of Cu in the reactor as noted above, the oxidation front advances very fast and the generated heat is left behind. We assume for simplicity that the reactor is fully adiabatic and the heating of the bed of solids with the energy released by Cu oxidising to CuO is complete and no axial or radial temperature profiles develop. The high exothermicity of the Cu oxidation reaction and the modest content in Cu selected, gives as a result an increase in temperature in the packed bed of about 8ºC. The high temperature achieved in the oxidation front (i.e., 910ºC) and in the solids left behind said oxidation reaction front ensures the complete conversion of the pure oxygen, and the outlet flow (10) during this stage is zero in this example (it would be mainly composed of nitrogen if the oxidizing gas (9) was air or enriched air. The use of pure O₂ (or a mixture of O₂/CO₂) avoids any losses of CO₂ by calcination of CaCO₃ during this sub-step j). Once the Cu has been totally oxidized with oxygen (9), the next step jj) completes the chemical looping combustion of a BFG fuel gas flow (8). This consists of reducing the CuO solids with the CO and H₂ contained in BFG. In this case, the operation is carried out with a flow of 0.52 kg/s of BFG (i.e., 1.35 MW_{LHV} of thermal input). During this step, a flow of 0.59 kg/s composed of 47%v CO₂, 48%v N₂ and 5%v H₂O is discharged at 910ºC. During the reduction of CuO, the reaction front moves forward fast and the heat released during the CuO reduction is dedicated to increase the temperature of the solids left behind the reduction reaction front. For these operating conditions, the increase in temperature in the reactor is calculated to be 8ºC. Once the CuO has been completely reduced to Cu, the packed bed is left at a uniform temperature of 918 ºC. For simplicity, the inlet BFG (8) is assumed to be at the same temperature as the solids at the end of step jj). When feeding gas reactants at lower temperatures to the packed bed reactor, a heat transfer front will develop giving as a result a colder region that grows from the entry point of the gas reactants and that is at the temperature of the gas reactants. The skilled in chemical looping combustion in packed beds can provide solutions to manage the appearance of such colder regions, for example by operating the packed beds with reverse flow of the inlet gases, by using regenerative heat exchangers to preheat feed gases, or by loading the packed bed with higher concentration of the metal Me at the gas entrance, to compensate with additional heat (released in the combustion of a fuel gas in step i)) the cooling effect of the lower temperature feed gases.

Following the method of this invention, the next step involves step ii) in which a CO₂ partial pressure swing is applied by feeding steam (100) to the bed of solids by opening valve (101), and to extract pure CO₂ (7) and steam (100) from the previous heated solids containing CaCO₃. This is allowed because the packed bed of solids preheated in step i) contains at the beginning of this step ii) sufficient sensitive heat to accomplish the calcination of 7.5%w of CaCO₃, (equivalent to 4.2%w of active CaO fully carbonated to CaCO₃) leaving the bed at 770ºC, which is the assumed temperature to start a new CASOH step in a subsequent cycle. It is assumed that the time given for such a CO₂ partial pressure swing step allows the calcination of CaCO₃ leading to a production of a steady flow of 1 kg/s of pure CO₂ during this step iii). The consumption of steam (100) in step ii) is estimated to be an average flow of 0.72 kg/s along the duration of step ii).

It must be noted that, due to the exothermic nature of the WGS reaction of the CO contained in the BFG in step iii), the heat stored in the bed of solids at the end of steps iii) and i) is larger than the heat required for calcination of CaCO₃ in step ii). In this particular example, this can be seen by the small difference in the carbonate formed at the end of the CASOH stage iii) (4.1%w) and the 4.2%w of CaCO₃ calcined at the end of step ii). Although this is a small difference, it will accumulate with the number of cycles. Therefore, for the previous temperatures to be cyclically repetitive and in steady state, we need to assume that there is sufficient reservoir of CaCO₃ available in the bed during the calcination, for example by initiating the cycles in a bed with excess of limestone. If this is not the case, and the only CaCO₃ in the bed is the formed by CaO carbonation, an additional step involving a moderate cooling of the bed of solids will have to be carried out before the CASOH step, so as to extract from the packed bed of solids the heat released by the water gas shift reaction of the CO. There are several means to achieve such moderate cooling of the bed: in addition to standard heat removal techniques (i.e., by heat exchangers embedded in the bed of solids), an endothermic reaction like the steam reforming of a small flow of a hydrocarbon like CH₄ can be used, with one of the gas reactants staged along the reactor length to ensure that the cooling is evenly distributed along the reactor length.

It is important to highlight that, from the mass and energy balanced noted above, the application of the method of this invention to calcine CaCO₃ generated during the CASOH step almost doubles the efficiency in the generation of H₂-rich gas from BFG respect to the previous state of the art design of the CASOH process. In this example, about 82% of the BFG used in the process (as the gas (13) in step iii) and as the fuel (8) in step i)) is converted into a H₂-rich gas (15) while only the remaining 18% of the BFG is used to supply energy for the calcination of CaCO₃ during the step i). This is a substantial improvement with respect to the configuration proposed by the state of the art given by Fernandez et al. (2020), in which only 30% of the BFG could be used to produce H₂-rich gas from the CASOH step, while the energy contained in the remaining 70% of the BFG had to be extracted as high temperature heat. Furthermore, the CO₂ purity of the 1kg/s gas stream during step ii) is close to 100%CO₂ after condensation of steam (100) while the CO₂ rich stream in the CASOH state of the art is only about 55-60%v still requiring a separation from the N₂ contained in BFG.

Note that the application of the method to capture CO₂ to other fuel gases containing CO₂ or to a combustion flue gas by carbonation of CaO in a packed bed, would not differ in any essential feature from the case described in the previous paragraph.

## Claims

1. Process to recover in high purity form CO₂ (7) after separating it from steam (100), the CO₂ being released from the calcination of solids containing CaCO₃, with said solids being preheated to a temperature between 650-800ºC and arranged in a thermally insulated vessel (1), wherein the process is **characterized by** the continuous repetition, at least twice, of a sequence of at least the following consecutive steps:
i) a heating up step combusting a fuel (8) within the bed of solids to heat up the bed of solids containing CaCO₃ to an average temperature of between 800-950ºC; and
ii) a CO₂ partial pressure swing step by feeding steam (100) to the bed of solids.

2. The process of claim 1 where the combustion of the fuel (8) is carried out with air, oxygen-enriched air or O₂-CO₂ comburent mixtures (9).

3. The process of any one of the preceding claims wherein the fuel (8) is a hydrocarbon gas or hydrogen.

4. The process of any one of the preceding claims further comprising a step of introducing a batch of particles of solids containing CaCO₃ (4) in the thermally insulated vessel (1) so that the solids are displaced in each combustion step while extracting a batch of particles containing CaO (5).

5. The process of any one of the preceding claims wherein the combustion taking place in the heating-up step i) is a chemical looping combustion of the gaseous fuel (8) with a comburent gas (9) by dividing the step i) in two sub-steps:
j) a first sub-step involving the oxidation with a comburent gas (9) of a second solid (12) containing a metal such as Ni or Cu, the second solid being mixed in the bed of CaCO₃ containing solids; and
jj) a second sub-step, involving the reduction of the oxidised form of the metal fuel formed in sub-step j) by feeding a fuel gas (8) to regenerate the metal fuel in the second solid (12) while releasing concentrated CO₂ (11).

6. The process of any one of the preceding claims further comprising an additional carbonation step iii) of the CaO (5) generated in step ii) by feeding a combustion flue gas or any other gas containing CO₂ to the packed bed of solids to increase the molar conversion of CaO to CaCO₃ between 0.03 and 0.1 and restore the CaCO₃ (4) in the bed of solids (1) that is at the beginning of step i).

7. The process of any one of claims 1 to 5 further comprising an additional carbonation step iii) of the CaO (5) generated in step ii) by feeding a fuel gas (13) and steam (14) to the packed bed of solids containing CaO and Ni to catalyse the steam reforming of the fuel gas (13) to hydrogen (15) while increasing the molar conversion of CaO to CaCO₃ between 0.03 and 0.1 and restore the CaCO₃ (4) that is in the bed of solids (1) at the beginning of step i).

8. The process of any one of claims 1 to 5 further comprising an additional carbonation step iii) of the CaO (5) generated in step ii) by feeding a gas containing CO (13) and steam (14) to the packed bed of solids containing CaO and Cu to catalyse the water gas shift reaction of the CO contained in (13) to hydrogen (15) an CO₂ while increasing the molar conversion of CaO to CaCO₃ between 0.03 and 0.1 and restoring the CaCO₃ (4) that is in the bed of solids (1) at the beginning of step i).

9. The process of claim 8 further comprising and additional step of cooling of the packed bed of solids containing CaO and Cu to remove the heat released to the solids by the water gas shift reaction of the CO contained in a feeding of carbon containing gas (13) in step iii)

10. The process of any one of the preceding claims, wherein the thermal power of the combustion during step i) is the result of the multiplication of the average power input in the equivalent kiln without CO₂ capture and the ratio between the sum of the duration step i) and step ii) divided by the duration of step i).

11. The process of any of claims 1-10, wherein the step of heating up lasts between 5 and 20 min and/or the step of CO₂ partial pressure swing lasts between 5 and 20 min.

12. The process of any of claims 1-11 wherein the molar flow of steam fed during step ii) is controlled to be proportional to the total flow of gas targeted at the gas exit during step ii) multiplied by the difference between the total pressure during step ii) and the equilibrium partial pressure of CO₂ on CaO, both divided by the total pressure.

13. Shaft kiln to carry out the process of claim 4 to calcine CaCO₃ (4) in the form of limestone and produce a mixture of CO₂ (7) and steam (100) and CaO (5), the shaft kiln comprising:
• a first vertical shaft;
• means to stage the burning of a fuel (8) with preheated air or other comburent mix (9) in its calcination zone,
**characterized in that** the kiln further comprises:
• inlet and outlet gas and solid pipes comprising switching valves with one of the inlet pipes having a switching valve (101) to feed steam (100) to the lower part of the calcination zone and having exit pipes having a switching valve (201) to allow extraction of the product gas containing CO₂ (7) and steam (100); all configured to allow the continuous repetition of a sequence of at least a first operating period and a second operating period:
• means for feeding a batch of limestone through a solid valve and extracting lime (5) with another solid valve during the first operating period lasting between 5-20 min where fuel (8) is burned within the calcination zone in a staged mode, with the air or other comburent mix (9) being preheated by the CaO (5) and the limestone (4) being preheated with the combustion flue gases flowing from the calcination zone, and
• means for sealing the gas entries/outlets and valves for solids during the second operating period lasting between 5-20 minutes except a gas inlet to feed steam (100) to the bottom of the calcination zone and a gas outlet, to extract a product gas containing pure CO₂ (7) and steam (100).

14. The shaft kiln of claim 13 further comprising a second vertical shaft connected to the first vertical shaft, the second vertical shaft comprising an additional flow of air to enter the second vertical shaft, in order to transport heat from the lime cooling region and the hot flue gases to the limestone preheating region.

15. The shaft kiln of any one of claims 13 or 14, comprising a thermally insulated vessel (1), wherein the thermally insulated vessel (1) is the calcination section of either the first vertical shaft or the second vertical shaft further comprising a limestone preheating zone at the top of the kiln (30) and a CaO cooling section (31) that preheats combustion air or other comburent mix (9).
